# EUROPEAN PATENT APPLICATION

(11) **EP 0 631 114 A2**
(43) Date of publication of application: **28.12.1994**
(21) Application number: 94304373.7
(22) Date of filing: 16.06.1994
(51) Int. Cl.: G01F 1/76, G01F 1/66, G01P 5/00

(54) **Method and assembly for measuring mass flow or velocity flow of a fluid**

(30) Priority: 19.06.1993 GB 9312731
(71) Applicant: MMS SPACE SYSTEMS LIMITED, Stanmore, Middlesex HA7 4LY (GB)
(72) Inventor: Quine, Brendan Mark Edward, Filton, Bristol BS12 7QW (GB)
(74) Representative: Waters, Jeffrey

(57) **Abstract**

Mass flow or velocity flow of a fluid is measured when passing through a smooth bore pipe (1) by transmitting sound at an angle (α) to the direction of fluid flow through and across the fluid flow as a continuous wave alternately in one direction and in the reverse direction. The phase relationship between transmitted and received sound signals in one of said directions is substantially minimised by adjustment of the transmission frequency and the phase relationship between the transmitted and received sound signals in the other direction is measured. The magnitude of the transmission frequency adjustment is combined algebraically with the measured phase relationship in the other direction to produce a mass flow rate or velocity flow rate value.

## Description

This invention relates to a method for measuring mass flow or velocity flow of a fluid and to a fluid flow meter assembly.

Fluid flow meter assemblies and methods for measuring velocity flow of a fluid are known which employ transducers which project at least partially into the flow path of the fluid giving rise to undesirable interruption and disturbance of the flow path with consequent reduction in accuracy of the fluid flow velocity measurement. Such conventional fluid flow meter assemblies generally utilise a pair of transducers which project at least partially into the fluid flow path and through which different frequency sound waves are sent alternately in opposite directions. Apart from the problems produced by the interference of the fluid flow path the use of at least two different frequency sound waves undesirably increases the complexity of the circuitry required to produce a velocity flow rate measurement and prevents the use of such conventional assemblies for producing mass flow values.

There is therefore a need for a generally improved method for measuring mass flow or velocity flow of a fluid and for a generally improved fluid flow meter assembly utilising such a method which at least reduces or minimises the foregoing disadvantages associated with the conventional methods and assemblies.

According to a first aspect of the present invention there is provided a method for measuring mass flow or velocity flow of a fluid flowing in a substantially smooth bore pipe, characterised in that sound of the same frequency is transmitted at an angle to the direction of the fluid flow across and through the fluid flow as a continuous wave alternately in one direction and in the reverse direction, the phase relationship between transmitted and received sound signals in one of said one and reverse directions is substantially minimised by adjustment of the transmission frequency, the phase relationship between the transmitter and received sound signals in the other of said one and reverse directions is measured, and the magnitude of said transmitted frequency adjustment is combined algebraically with said measured phase relationship in said other direction to produce a mass flow rate or velocity flow rate value for the fluid flow.

Preferably the fluid whose mass flow or velocity flow is measured is a liquid.

Advantageously the frequency of the sound transmitted is in the range of from 1 to 5 megahertz (MHz).

Preferably the fluid flow is continuous or pulsed.

Conveniently the sound is transmitted at an angle of at least 45 degrees.

Advantageously the sound is transmitted at at least one continuous sinusoidal frequency.

Advantageously the phase relationship in one of said one and reverse directions is minimised to substantially zero.

According to a further aspect of the present invention there is provided a fluid flow meter assembly, characterised by including a substantially smooth bore pipe through which fluid whose mass flow or velocity flow is to be measured can be passed continuously or discontinuously, a transducer device having a pair of spaced apart transducers between which the pipe extends with the longitudinal axis of the pipe being at an angle to the longitudinal axis of the device, means for generating a continuous sound wave and for transmitting said continuous sound wave at the same frequency alternately in one direction and in the reverse direction across and through the pipe via the transducers, means for detecting the phase shifts in said sound wave in said one and reverse directions, frequency control means operable to adjust the transmission frequency of said sound wave so that the phase relationship between the sound signal transmitted from one said transducer and a sound signal received by the other said transducer in one of said one and reverse directions is substantially minimised, means for measuring the phase relationship between the transmitted and received sound signals in the other of reverse directions, and means for combining algebraically the magnitude of the transmission frequency adjustment with the measured phase relationship in said other direction to produce a mass flow rate or velocity flow rate value for the fluid flow.

Preferably the two transducers are aligned with one another face to face and are arranged such that the longitudinal axis through the two transducers is at an angle of at least 45 degrees with respect to the longitudinal axis of the pipe and thereby with respect to the direction of fluid flow along the pipe in operation of the assembly.

Conveniently each transducer is a piezo-ceramic disk.

Advantageously each transducer has a diameter less than or equal to two-thirds of the internal bore diameter of the pipe.

Preferably each transducer disk is housed in a larger diameter cylinder and recessed into a plug sound absorbing foamed plastics material also housed in the cylinder.

Conveniently the surface of each transducer facing outwardly from the plug and towards the pipe is in contact with an acoustically conductive insert in the cylinder which insert, at the side therefore remote from said surface, extends through the wall of said pipe, so as to make direct contact, in use, with the fluid flowing through the pipe.

Advantageously the acoustically conductive insert is made of a resin having acoustic properties selected to match those of the fluid whose mass or velocity flow is to be measured, and the surface of the insert which, in use, contacts the fluid, is smooth.

Preferably said transducer device and pipe are mounted in a support.

Conveniently the means for generating a continuous sound wave is a sine wave generator operable to produce a continuous sinusoidal sound wave.

Advantageously the detection means includes a phase meter for receiving and comparing inputs from the transmitted and received sound signals and for outputting an output signal representative of the phase difference.

Preferably the frequency control means includes a zero point controller operable to receive the output signal from the phase meter and control the sinusoidal wave generator operating frequency.

For a better understanding of the present invention and to show how the same may be carried into effect, reference will now be made by way of example, to the accompanying drawings, in which;
Figure 1 is a schematic diagram of a transducer device forming part of the fluid flow meter assembly according to a first embodiment of the present invention.
Figure 2 is a block diagram of basic sound generation and detection means for use with the device of Figure 1, to send, receive and compare signals and,
Figure 3 is a block diagram of an alternative sound wave generation means, detection means and frequency control means for use with the transducer device of Figure 1 to allow transmission and reception of sound signals in both directions and minimisation of one such signal.

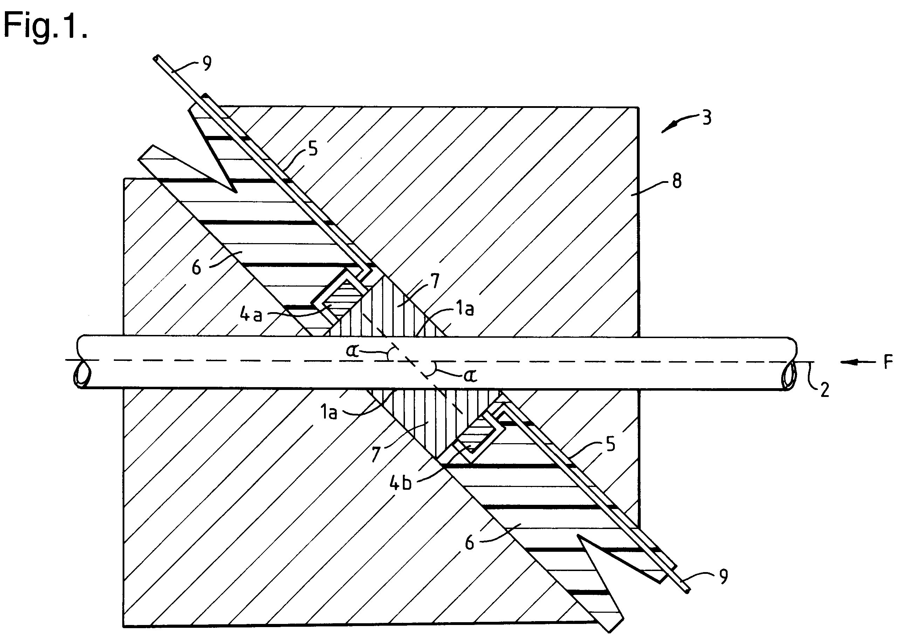

As shown in the accompanying drawings a method is provided by the present invention for measuring mass flow or velocity flow of a fluid, preferably a liquid, flowing in a substantially smooth bore pipe 1. In the method sound of the same frequency is transmitted at an angle to the a to the direction of fluid flow or centre line 2 of the pipe 1 across and through the fluid flow represented by the arrow F in Figure 1 as a continuous wave alternately in one direction and in the reverse direction. The phase relationship between transmitted and received sound signals in one of said one and reverse directions is substantially minimised, and preferably reduced to zero, by adjustment of the transmission frequency. The phase relationship between the transmitted and received sound signals in the other of said one and reverse directions is measured and the magnitude of the transmission frequency adjustment is combined algebraically with the measured phase relationship in the other direction to produce a mass flow rate or velocity flow rate value for the fluid flow. In essence the method and the fluid flow meter assembly of the first embodiment of the invention shown in Figure 1 of the accompanying drawings make use of the "time of flight" principle and are suitable for measuring single phase liquid flow in both continuous and discontinuous (pulsed) flow modes. Both true mass flow and velocity flow can be measured and the method and assembly are particularly suited to flow measurement in narrow bore pipes 1 where the working fluid or liquid is homogeneous.

Measurement of the phase difference gives a coarse measurement of mass flow or velocity flow to a first order independent of the speed of sound. Combination of this measurement algebraically with the frequency adjustment magnitude provides a more accurate measurement of the mass flow or velocity flow of the fluid.

A fluid flow meter assembly generally referenced 3 according to one embodiment of the present invention is illustrated in Figure 1 of the accompanying drawings. This assembly 3 includes the substantially smooth bore pipe 1 and a transducer device having a pair of spaced apart transducers 4a and 4b between which the pipe 1 extends with the longitudinal axis 2 of the pipe 1 making the angle a to the longitudinal axis of the transducer device which is in fact the axis connecting the two transducers 4a and 4b in Figure 1.

The assembly 3 also includes means for generating a continuous sound wave and for transmitting the continuous sound wave of the same frequency alternately in one direction and in the reverse direction across and through the pipe 1 via the transducers 4a and 4b and means for detecting the phase shifts in said sound wave in said one and reverse directions. Additionally forming part of the assembly 3 are frequency control means operable to adjust the transmission frequency of the sound wave so that the phase relationship between the sound signal transmitted from one transducer 4a and a sound signal received by the other transducer 4b in one direction is substantially minimised. Of course as an alternative the direction in which the phase relationship is minimised could be that between the transducer 4b and 4a. The assembly also includes means for measuring the phase relationship between the transmitted and received sound signals in the other direction and means for combining algebraically the magnitude of the transmission frequency adjustment with the measured phase relationship in the other direction to produce a mass flow rate or velocity flow rate value for the fluid flow.

The two transducers 4a and 4b are aligned with one another face to face and are arranged such that the angle α is at least 45 degrees so as to reveal a large component of fluid velocity along the transducer site axis. Whilst angles in the range of 30° to 60° are possible, angles of less than 45 degrees are undesirable as they give rise to deflections of the sound on the pipe/fluid boundaries which can be caused by property mismatch. Additionally angles of less than 45 degrees entail a greater separation between the transducers giving rise to attenuation of the sonic signal. Passing the sound at an angle across the pipe 1 rather than axially down the pipe 1 means that the transmitted time of the sound is small which enhances the means of measurement of pulsed flow where the velocity is changing rapidly.

The transducers 4a and 4b can be of any suitable form but preferably are piezo-ceramic disks. The alignment of the transducers with each other maximises the transmitted intensity of sound and minimises interference. Preferably each transducer has a diameter less than or equal to two-thirds of the internal bore diameter of the pipe 1 so that the whole sound beam passes through a complete cross section of the fluid flow.

Each transducer disk 4a and 4b is housed in a larger diameter cylinder 5 and recessed into a plug 6 of sound absorbing foamed plastics material also housed in the cylinder 5. This construction limits reflection of the received beam and suppresses back echoes. Any impulse produced by a transducer transversely is suppressed in the material of the plug 6. The surface of each transducer facing outwardly from the plug 6 and towards the pipe 1 is in contact with an acoustically conductive insert 7 in the cylinder 5 which insert 7 at the side thereof remote from the transducer surface in contact therewith extends throughout portions la in the external wall of the pipe 1, so as to make contact, in sue, directly with the fluid flowing through the pipe 1. The inner surface of the insert 7 contacting the fluid directly is formed, such as by moulding, so as to be substantially smooth. Thus only the front surface of the transducer is in contact with a good acoustically conductive medium so that only impulses produced in the axial direction of the transducers 4a and 4b are transmitted. The foamed plastics material forming the plug 6 also provides acoustic insulation from the surrounding cylinder 5 which preferably is made of metal and which therefore is itself a good acoustic conductor.

The acoustically conductive insert 7 is made of a material having acoustic properties selected to match those of the fluid or liquid whose mass or velocity flow through the pipe 1 is to be measured. Preferably the material is a resin such as ARALDITE 2003 (Trade Mark). Preferably the insert material 7 is chosen to have the same density and speed of sound transmission therethrough as the fluid or liquid passing through the pipe 1. With the form of construction shown in Figure 1 in which the inserts extend through the wall of the pipe 1 the measurements are non-intrusive to the flow of the fluid or liquid through the pipe 1 which prevents pressure losses or associated turbulence. This also enables the assembly of the invention to be used with small bore pipes 1 where the smooth bore eliminates the problems usually encountered by having a relatively large transducer projecting into a relatively small diameter internal bore pipe.

Matching the acoustic properties of the material of the insert 7 with the fluid passing through the pipe 1 prevents reflection and deflection at the fluid/material interface. The use of acoustically conductive material for the insert 7 between the transducers 4a or 4b and the pipe 1 avoids the use of any protrusions into the flow path in the bore of the pipe 1 which in turn prevents sound dispersion caused by eddies and density variations in the flowing fluid. Preferably the transducer device and pipe 1 are mounted in a support 8 preferably in the form of a block of metal such as aluminium. Electrical current is supplied to the transducers 4a and 4b for the propagation of sound by means of conductors 9.

The assembly of the present invention utilises a continuous sound wave to sense the time lag caused by fluid flowing through the pipe 1. Sound is transmitted at a single continuous sinusoidal frequency although multiple frequencies may be superimposed and later separated. This eliminates the effects of dispersion which can be a major source of error in conventional time pulsed flow meter assemblies. Use of a continuous constant wave also means that the amplitude of the transmitted and received signals remain constant to a greater degree making detection and signal amplification an easier task.

The sound transmitted between the transducers 4a and 4b in either direction has the same frequency. The continuous wave sound frequency value preferably is in the range of from 1 to 5 megahertz (MHz). The actual value is selected after consideration of the flow range acoustic band width of the fluid, minimisation of defraction, size of transducer and response time. Hence initially an approximate value of sound wave transmission frequency is chosen and this is fine tuned so that the two transducers give a minimum, preferably zero, phase difference between transmitted and received signals when there is no flow for a given initial speed of sound.

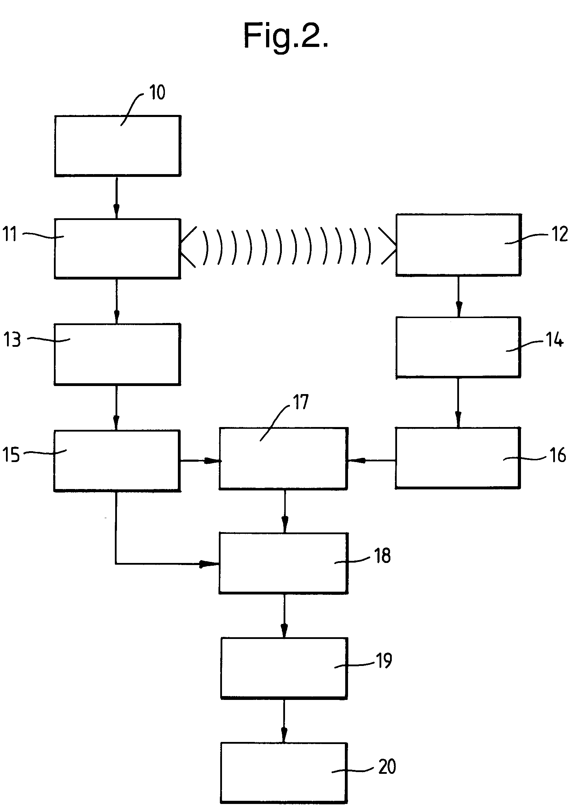

The assembly includes means for generating a continuous sound wave which comprises or includes a sine wave generator 10 shown in Figure 2. The generator 10 is operable to produce a continuous sinusoidal sound wave. The output signal from the generator 10 is passed to one of the two transducers for transmission at 11 as a sent signal and for reception at the other transducer at 12 as a received signal. Thus in the Figure 2 diagram both the sent signal 11 and received signal 12 are fed to respective first input amplification stages 13 and 14 which operate with large gains to produce square waves from the transmitted and detected signals (the sent and received signals). The output signals from the amplification stages 13 and 14 are passed to respective high pass filtering stages 15 and 16 which operate to maintain the integrity of the signals. The output signals from the two filter stages 15 and 16 are fed to a phase meter 17 which generates the phase difference between the two input signals. This produces a pulse with modulated signal at twice the transmission frequency which is passed to a pulse gate 18 which is timed off the transmitted signal and which discards every other pulse to remove the effects involving duty cycle discrepancy between transmitted and detected signals caused during the transmission or amplification. The phase meter 17 and pulse gate 18 thus form part of detection means for receiving and comparing inputs from the transmitted and received sound signals and for outputting and output signal representative of the phase difference. Phase detection is restricted to a specific range and any noise outside this range is rejected. The phase signal is turned into a practical output form by the use of a low pass filter 19 and a differential summing amplifier 20 which produces a DC voltage output of high quality low noise. Subsequently the DC voltage output which represents the phase signal is combined algebraically with the magnitude of the transmission frequency adjustment in the other of the two directions between the transducers in any convenient manner.

With the detection system of Figure 2 at low flow velocities the detected signal may be dominated by small fluctuations in the speed of sound in the fluid. These can be caused by thermal or pressure variations changing the fluid density. As the phase meter detection system Figure 2 is a narrow band detection system if the velocity to be detected are several orders smaller than the speed of sound in the fluid, changes in temperature of only one degree will cause over ranging of the meter.

This can be overcome by making alternate measurements so that two phase shift readings are made in opposite directions. One measures the phase shift when the component of sound velocity is travelling in flow velocity direction and the other when the component of sound velocity is travelling against the flow of velocity. Again initially the frequency of sound is selected so that the phase difference is zero. If identical or similar transducers 4a, 4b are used this will be true for both readings. One of the readings is held to zero using a feed back control loop and the reading can be controlled to zero in two basic ways.

As a first way the controlled reading may be zeroed by small adjustments of the frequency.

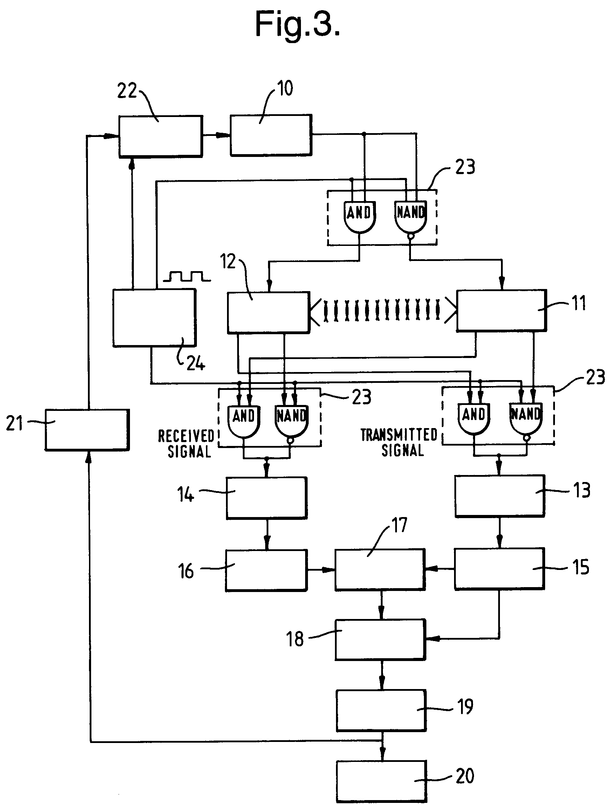

As a second way the controlled reading may be zeroed by an offset adjustment term subtracted from the phase meter output such as in the differential amplifier 20. Thus as shown in the Figure 3 embodiment the detection system of Figure 2 may be augmented with a zero point controller 21 connected between the input side of the amplifier 20 and via a latched memory (on high) 22 to the sine wave generator 10. Moreover analogue switching circuitry 23 may be provided to carry out required logical switching tasks in conjunction with a time clock 24.

With the system of Figure 3 when the second measurement in the opposite direction is made the controlled variable from the first measurement is used in either the new frequency or the offset voltage (inverted). This has the effect of removing to a large degree the desirable effects of temperature and pressure and fixing the measurement range at substantially zero.

Provided that the controller 21 maintains its lock on the particular measuring range and the initial speed of sound and transmission frequency are known, the flow velocity may be calculated to a good approximation independent of the current speed of sound or frequency. Moreover the degree to which the controller 21 adjust the frequency (offset voltage) may easily be measured. This will reveal the current speed of sound. If the speed of sound is known, density corrections may be calculated to give a true mass flow reading in the pipe 1 rather than just a velocity rate measurement.

The method and assembly of the present invention are particularly suitable for measuring flow in pipes 1 of the order of 5mm in internal diameter. This has the advantage that such narrow bore pipes minimise the distance between the transducers 4a and 4b allowing smaller transducers to be used with less attenuatation. The natural resonances of small transducers forward in the best acoustic transmission range for a typical fluid which preferably is in the range of from 1 to 5 MHz. Typical flow rates in such small bore pipes are low and in the preferred operating frequency range result in generation of only a small phase difference. Although this can create amplification difficulties it also has the advantage of being easier for the controller 21 to maintain a lock. Thus the controller 21 may be a narrow band controller which prevents "jumping" between different locks and therefore measurement ranges.

The method and assembly of the present invention provide accurate rapid measurements suitable for measuring pulsed fluid flow in narrow diameter small bore pipes of the order of 5mm internal diameter. There are no mechanical moving parts which provides high reliability and robust operation. Thermal and density fluctuations may be corrected and in the Figure 3 system the controller 21 removes density and temperature fluctuations to a first order as a precursor to the finer correction resulting from the subsequent algebraic combination. Use of the same sound frequency in both directions across the transducers 4a and 4b reduces processing complexity. Only one output phase signal is produced and this is proportional to the flow of velocity which eliminates comparative processing required by conventional techniques. The process produces very quick accurate measurements as only one flow control cycle is needed per measurement as the reversed signal has no control and is therefore very quick.

## Claims

1. A method for measuring mass flow or velocity flow of a fluid flowing in a substantially smooth bore pipe, characterised in that sound of the same frequency is transmitted at an angled to the direction of the fluid flow across and through the fluid flow as a continuous wave alternately in one direction and in the reverse direction, the phase relationship between transmitted and received sound signals in one of said one and reverse directions is substantially minimised by adjustment of the transmission frequency, the phase relationship between the transmitted and received sound signals in the other of said one and reverse directions is measured, and the magnitude of said transmission frequency adjustment is combined algebraically with said measured phase relationship in said other direction to produce a mass flow rate or velocity flow rate value for the fluid flow.

2. A method according to claim 1, in which the fluid whose mass flow or velocity flow is measured is a liquid.

3. A method according to any one of claims 1 or claim 2, in which the frequency of the sound transmitted is in the range of from 1 to 5 Megahertz (MHz).

4. A method according to any one of claim 1 to 3, in which the fluid flow is continuous or pulsed.

5. A method according to any one of claims 1 to 4, in which the sound is transmitted at an angle of at least 45 degrees.

6. A method according to any one of claims 1 to 5, in which the sound is transmitted at at least one continuous sinusoidal frequency.

7. A method according to any one of claims 1 to 6, in which the phase relationship in one of said one and reverse directions is minimised to substantially zero.

8. A fluid flow meter assembly, characterised by including a substantially smooth bore pipe (1) through which fluid whose mass flow or velocity flow is to be measured can be passed continuously or discontinuously, a transducer device having a pair of spaced apart transducers (4a, 4b) between which the pipe (1) extends with the longitudinal axis (2) of the pipe being at an angled to the longitudinal axis of the device, means for generating a continuous sound wave at the same frequency and for transmitting said continuous sound wave alternately in one direction and in the reverse direction across and through the pipe (1) via the transducers (4a, 4b), means for detecting the phase shifts in said sound wave in said one and reverse directions, frequency control means operable to adjust the transmission frequency of said sound wave so that the phase relationship between the sound wave transmitted from one said transducer (4a) and a sound signal received by the other said transducer (4b) in one of said one and reverse directions is substantially minimised, means for measuring the phase relationship between the transmitted and received sound signals in the other of said one and reverse directions, and means for combining algebraically the magnitude of the transmission frequency adjustment with the measured phase relationship in said other direction to produce a mass flow rate or velocity flow rate value for the fluid flow.

9. An assembly according to claim 8, wherein the two transducers (4a, 4b) are aligned with one another face to face and are arranged such that the longitudinal axis through the two transducers is at an angle of at least 45 degrees with respect to the longitudinal axis of the pipe (1) and thereby with respect to the direction of fluid flow along the pipe in operation of the assembly.

10. An assembly according to claim 8 or claim 9, wherein each transducer (4a, 4b) is a piezo-ceramic disk.

11. An assembly according to any one of claims 8 to 10, wherein each transducer 4a, 4b) has a diameter less than or equal to two-thirds of the internal board diameter of the pipe (1).

12. An assembly according to claim 10 or claim 11, wherein each transducer disk (4, 4b) is housed in a larger diameter cylinder (5) and recessed into a plug (6) of sound absorbing foamed plastics material also housed in the cylinder (5).

13. An assembly according to claim 12, wherein the surface of each transducer facing outwardly from the plug (6) and towards the pipe (1) is in contact with an acoustically conductive insert (7) in the cylinder (5) which insert (7), at the side thereof remote from said surface, extends through the wall of said pipe so as to make direct contact, in use, with fluid flowing through the pipe(1).

14. An assembly according to claim 13, wherein the acoustically conductive insert is made of a resin having acoustic properties selected to match those of the fluid whose mass or velocity flow is to be measured and wherein the surface of the insert which, in use, contacts the fluid, is smooth.

15. An assembly according to any one of claims 8 to 14, wherein said transducer device and pipe (1) are mounted in a support.

16. An assembly according to any one of claims 8 to 15, wherein the means for generating a continuous sound wave is a sine wave generator (10) operable to produce a continuous sinusoidal sound wave.

17. An assembly according to any one of claims 8 to 16, wherein the detection means includes a phase meter (17) for receiving and comparing inputs from the transmitted and received sound signals and for outputting an output signal representative of the phase difference.

18. An assembly according to claim 17, wherein the frequency control means includes a zero point controller (21) operable to receive the output signal from the phase meter (17) and control the sinusoidal wave generator (10) operating frequency.
